# EUROPEAN PATENT APPLICATION

(11) **EP 4 317 690 A1**
(43) Date of publication of application: **07.02.2024**
(21) Application number: 22778972.4
(22) Date of filing: 30.03.2022
(51) Int. Cl.: F04C 2/10, H02K 11/00

(54) **ELECTRONIC OIL PUMP**

(30) Priority: 30.03.2021 CN 202110339289
(71) Applicant: Zhejiang Sanhua Automotive Components Co., Ltd., Hangzhou, Zhejiang 310018 (CN)
(72) Inventor: LIU, Lili, Hangzhou, Zhejiang 310018 (CN); YE, Wei, Hangzhou, Zhejiang 310018 (CN); GUO, Yao, Hangzhou, Zhejiang 310018 (CN); QIAN, Fangxu, Hangzhou, Zhejiang 310018 (CN)
(74) Representative: Epping - Hermann - Fischer
(86) International application number: PCT/CN2022/083884
(87) International publication number: WO 2022/206790

(57) **Abstract**

An electronic oil pump (100), comprising a stator assembly (2), a circuit board assembly (5), and a pump housing (1). The pump housing (1) is at least partially conductive, and at least one of a stator core (41) of the stator assembly (2) and a reference formation of the circuit board assembly (5) is electrically connected to the conductive portion in the pump housing (1). The electronic oil pump (100) further comprises a conduction member (9), the conduction member (9) is fixedly connected or limited to the pump housing (1), a portion of the conduction member (9) is electrically connected to the conductive portion in the pump housing (1), and at least a portion of the outer surface of the remaining portion of the conduction member (9) forms a portion of the outer surface of the electronic oil pump (100), thereby facilitating reducing electromagnetic radiation of the stator assembly (2) and/or the circuit board assembly (5), and facilitating reducing the interference of electromagnetic radiation on electronic components of the circuit board assembly (5) and/or other external devices.

## Description

The present application claims the priority of the Chinese Patent Application No. 202110339289.X, titled "ELECTRONIC OIL PUMP", filed on March 30, 2021 with the China National Intellectual Property Administration, which is incorporated herein by reference in its entirety.

### FIELD

The present application relates to the technical field of vehicles, and in particular to an assembly of a lubrication system and/or a cooling system of a vehicle.

### BACKGROUND

An electronic oil pump is mainly used to provide power source for a lubrication system and/or cooling system of a vehicle. The electronic oil pump includes a stator assembly and a circuit board assembly. During the operation of the electronic oil pump, the circuit board assembly and/or the stator assembly may generate electromagnetic radiation, which may cause interference to electronic components of the circuit board assembly and/or other external devices, thus affecting the performance or use of the electronic components and/or other external devices.

### SUMMARY

An electronic oil pump is provided according to the present application, which is conducive to reducing the electromagnetic radiation of a stator assembly and/or a circuit board assembly, and further to reduce the interference of the electromagnetic radiation on the electronic components of the circuit board assembly and/or other external devices.

In order to achieve the above object, the following technical solution is provided according to an embodiment of the present application.

An electronic oil pump includes a stator assembly, a circuit board assembly and a pump housing, where at least a part of the pump housing is conductive, and at least one of a stator core of the stator assembly and a reference ground layer of the circuit board assembly is electrically connected to a conductive portion in the pump housing. The electronic oil pump further includes a conduction member, which is fixedly connected to the pump housing or limitedly arranged relative to the pump housing. A part of the conduction member is electrically connected to the conductive portion in the pump housing, and at least a part of the outer surface of the remaining portion of the conduction member forms a part of the outer surface of the electronic oil pump.

Through the above way, the outer surface of the rest portion of the conduction member can be exposed, so that the conduction member can be equipped with the external ground terminal. Since a part of the conduction member is electrically connected to the conductive portion in the pump housing, and at least one of the stator core of the stator assembly and the reference ground layer of the circuit board assembly is electrically connected to the conductive portion in the pump housing, that is, at least one of the stator core of the stator assembly and/or the reference ground layer of the circuit board assembly can be indirectly grounded to external, it is beneficial to reducing the electromagnetic radiation generated by the stator assembly and/or the circuit board assembly, and further facilitates reducing the interference of the electromagnetic radiation on electronic components of the circuit board assembly and/or other external devices.

### BRIEF DESCRIPTION OF THE DRAWINGS

FIG. 1 is a schematic perspective structural view of a first embodiment of an electronic oil pump according to the present application;
FIG. 2 is a schematic cross-sectional structural view of the electric oil pump shown in FIG. 1;
FIG. 3 is a schematic front structural view of the electronic oil pump in FIG. 1 with a pump cover removed;
FIG. 4 is a schematic perspective structural view of a conduction member shown in FIG. 1 or FIG. 2;
FIG. 5 is a schematic cross-sectional structural view of the conduction member shown in FIG. 4;
FIG. 6 is a schematic perspective structural view of a second embodiment of the electronic oil pump according to the present application;
FIG. 7 is a schematic perspective structural view of a conduction member shown in FIG. 6;
FIG. 8 is a schematic perspective structural view of a third embodiment of an electronic oil pump according to the present application;
FIG. 9 is a schematic perspective structural view of a conduction member in FIG. 8;
FIG. 10 is a schematic front structural view of a bottom cover shown in FIG. 8; and
FIG. 11 is a schematic cross-sectional structural view of the bottom cover taken along the A-A direction in FIG. 10.

### DETAILED DESCRIPTION OF THE EMBODIMENTS

The present application will be further described as follows in conjunction with the drawings and specific embodiments.

The specific embodiments of the present application are described in detail hereinafter in conjunction with the drawings. First of all, it should be noted that the directional terms, such as upper, lower, left, right, front, rear, inside, outside, top and bottom, mentioned or possibly mentioned in this specification are relative concepts defined based on those constructs shown in the corresponding drawings, and therefore may vary with locations or states of use. Therefore, these and other directional terms should not be construed as limiting terms.

An electronic oil pump in the following embodiments is mainly used to provide power for flowing working medium of a lubrication system and/or cooling system of a vehicle, and specifically provide power for flowing the working medium of the lubrication system and/or cooling system in a transmission system of the vehicle.

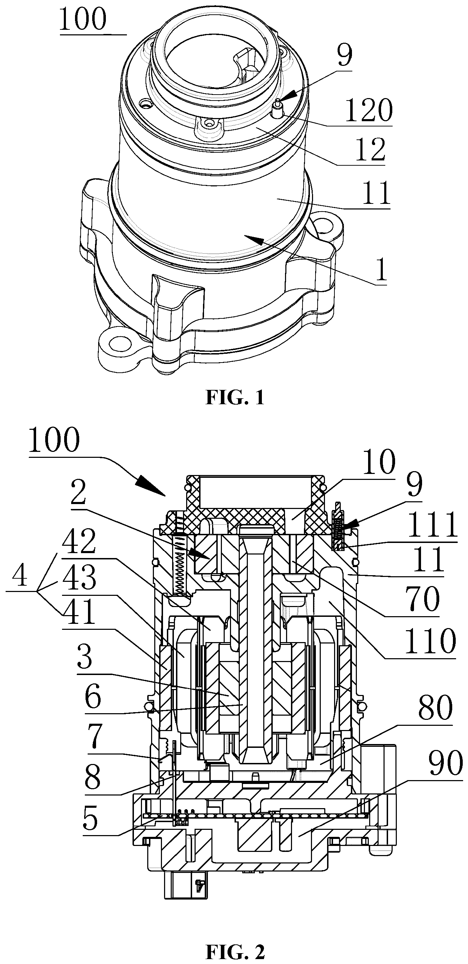

Referring to FIG. 1 and FIG. 2, an electronic oil pump 100 includes a pump housing, a first rotor assembly 2, a stator assembly 4, a second rotor assembly 3 and an circuit board assembly 5, where the circuit board assembly 5 can supply power to a coil in the stator assembly 4, and can also control the operation of the first rotor assembly 2 in real time based on the running environment. The electronic oil pump 100 has a pump chamber, in which the first rotor assembly 2, the stator assembly 4, the second rotor assembly 3 and the circuit board assembly 5 are arranged. In this embodiment, the pump chamber includes a first chamber 70, a second chamber 80 and a third chamber 90, where the first rotor assembly 2 is arranged in the first chamber 70, the stator assembly 4 and the second rotor assembly 3 are arranged in the second chamber 80, and the circuit board assembly 5 is arranged in the third chamber 90. The first chamber 70 is in communication with the second chamber 80, and the second chamber 80 is not in communication with the third chamber 90. The stator assembly 4 includes a stator core 41, an insulating frame 42 and a winding 43, where the insulating frame 42 at least covers at least a part of a surface of the stator core 41, and the winding 43 is wound around the insulating frame 42. During the operation of the electronic oil pump 100, the circuit board assembly 5 controls the current in the winding 43 passing through the stator assembly 4 to vary according to a predetermined rule, thereby controlling the stator assembly 4 to generate a varied excitation magnetic field, and the second rotor assembly 3 rotates under the action of the excitation magnetic field, so that the second rotor assembly 3 can directly or indirectly drive the first rotor assembly 2 to rotate. When the first rotor assembly 2 rotates, a volume of a hydraulic chamber in the first rotor assembly 2 varies, so that the working medium is pressed out to an outlet so as to generate flowing power. In this embodiment, at least part of the working medium in the first chamber 70 can flow into the second chamber 80, and the stator assembly 4 can be cooled by the working medium in the second chamber 80, since the stator assembly 4 is arranged in the second chamber 80, thus facilitating the heat dissipation of the stator assembly 4. In this embodiment, the working medium is cooling oil.

Referring to FIG. 1 to FIG. 3, the first rotor assembly 2 includes a first rotor 21 and a second rotor 22, where the first rotor 21 includes multiple internal teeth, and the second rotor 22 includes multiple external teeth, and a hydraulic chamber 701 is formed between the internal teeth of the first rotor 21 and the external teeth of the second rotor 22. In this embodiment, the hydraulic chamber is also a part of the first chamber 70. In this embodiment, the first rotor 21 is sleeved on an outer periphery of the second rotor 22. Referring to FIG. 1 again, the electronic oil pump further includes an inlet 10 and an outlet (not shown), where the working medium can enter the hydraulic chamber 701 through the inlet 10 and flow out the hydraulic chamber 701 through the outlet (not shown). Since a certain eccentricity is provided between the first rotor 21 and the second rotor 22, some of the external teeth of the second rotor 22 mesh with some of the internal teeth of the first rotor 21 when the second rotor 22 rotates, thereby driving the first rotor 21 to rotate. During one revolution of the first rotor 21 and the second rotor 22, the internal volume of the hydraulic chamber 701 varies. Specifically, when the first rotor assembly 2 rotates to a certain angle from an initial position, the volume in the hydraulic chamber 701 gradually increases to form a partial vacuum, and the working medium is sucked into the hydraulic chamber 701 through the inlet 10. When the first rotor 21 and the second rotor 22 continue to rotate, the volume of the hydraulic chamber 701 filled with the working medium gradually decreases, and the working medium is squeezed, so that the working medium entering the hydraulic chamber 701 is pressed out to through the outlet (not shown), thereby generating flowing power. In this embodiment, the electronic oil pump 100 further includes a pump shaft 6, which can drive part of the first rotor assembly 2 to rotate, specifically, in this embodiment, the pump shaft 6 can drive the second rotor 22 to rotate. In this embodiment, the pump shaft 6 is connected with the second rotor 22 and is connected with the second rotor assembly 2, where the second rotor assembly 2 drives the second rotor 22 to rotate by the pump shaft 6, thereby realizing the rotation of the first rotor assembly 2.

Referring to FIG. 1 and FIG. 2, the electronic oil pump 100 further comprises a pump housing 1, which is at least partially conductive, and the stator core 41 of the stator assembly 4 is electrically connected to the conductive portion in the pump housing. Specifically, the stator core 41 of the stator assembly 4 is electrically connected to the conductive portion in the pump housing 1 by contacting therewith. The reference ground layer of the circuit board assembly 5 can also be electrically connected to the conductive portion in the pump housing 1. Specifically, the electronic oil pump 100 further includes a conduction member 7 and a ground pin 8, which are fixedly connected or limitedly or integrally arranged, and the ground pin 8 is directly electrically connected with the reference ground layer of the circuit board assembly 5. The ground pin 8 electrically connects the reference ground layer of the circuit board assembly 5 and the conduction member 7, and the conduction member 7 electrically connects the ground pin 8 and the conductive portion in the pump housing, so that the electrical connection between the reference ground layer of the circuit board assembly 5 and the conductive portion in the pump housing can be realized by the above way. In this embodiment, the stator core 41 of the stator assembly 4 and the reference ground layer of the circuit board assembly 5 each is electrically connected with the conductive portion in the pump housing. Of course, in other embodiments, it is also possible that one of the stator core 41 of the stator assembly 4 and the reference ground layer of the circuit board assembly 5 is electrically connected with the conductive portion in the pump housing. Here, the reference ground layer of the circuit board assembly 5 refers to the zero potential point of the power system.

Referring to FIG. 1 and FIG. 2, the electronic oil pump 100 further includes a conduction member 9, which is fixedly connected with the pump housing or is limitedly arranged relative to the pump housing. A part of the conduction member 9 is electrically connected to the conductive portion in the pump housing, and at least a part of the outer surface of the remaining portion of the conduction member 9 forms a part of the outer surface of the electronic oil pump 100, so that the outer surface of the rest portion of the conduction member 9 can be exposed. Through the above-mentioned way, the exposed conduction member 9 can be equipped with an external ground terminal, and the "external" mentioned here and below can be the lubrication system and/or cooling system of the vehicle, and can also be a vehicle body or other systems of the vehicle. Since a part of the conduction member 9 is electrically connected to the conductive portion in the pump housing, and at least one of the stator core 41 of the stator assembly 4 and the reference ground layer of the circuit board assembly 5 is electrically connected to the conductive portion in the pump housing, that is, at least one of the stator core 41 of the stator assembly 4 and/or the reference ground layer of the circuit board assembly 5 can be indirectly grounded to external, it is beneficial to reducing electromagnetic radiation generated by the stator assembly 4 and/or the circuit board assembly 5, and further facilitates reducing interference of the electromagnetic radiation to the electronic components of the circuit board assembly 5 and/or other external devices.

In view of the above description, there are three embodiments of the electronic oil pump provided according to the present application. These three embodiments will be described in detail below.

Referring to FIG. 1 and FIG. 2, FIG. 1 and FIG. 2 are schematic structural views of a first embodiment of an electronic oil pump according to the present application. The structure of the electronic oil pump of the first embodiment is described in detail below.

Referring to FIG. 1 and FIG. 2, the pump housing 1 includes a first housing 11 capable of conducting electricity. The first housing 11 has a first housing chamber 110, which forms a part of the second chamber 80. In this embodiment, the stator assembly 4 is located in the first housing chamber 110. Of course, the stator assembly 4 can also be partially located in the first housing chamber 110. As shown in FIG. 2, the stator core 41 of the stator assembly 4 is electrical-conductively connected to a corresponding side wall of the first housing chamber 110. Specifically, in this embodiment, the stator core 41 of the stator assembly 4 is in direct contact with the corresponding side wall of the first housing chamber 110 by interference fit, so as to realize the electrical connection between them. Of course, in other embodiments, other conductive components may be arranged between them to realize the indirect electrical connection. It should be noted here that in this embodiment, the first housing 11 is an integral part. Of course, in other embodiments, the first housing 11 can also be a separate part, that is, the first housing 11 can be assembled by two or more components.

Referring to FIG. 1 and FIG. 2, in this embodiment, a central axis of the conduction member 9 is arranged in parallel with a height direction of the first housing 11. In the height direction of the electronic oil pump 100, a part of the conduction member 9 extends out of the first housing 11, and at least a part of the external surface of the conduction member 9 extending out of the first housing 11 is exposed.

Referring to FIG. 1 to FIG. 5, in this embodiment, the conduction member 9 is fixed to the first housing 11. Specifically, the conduction member 9 includes a connecting part 91, where at least a part of an outer peripheral surface of the connecting part 91 is formed with external threads 911, and the first housing 11 has a threaded hole 111, and the external threads 911 of the connecting part 91 are meshed with internal threads of the threaded hole 111, so that the conduction member 9 is fixed to the first housing 11.

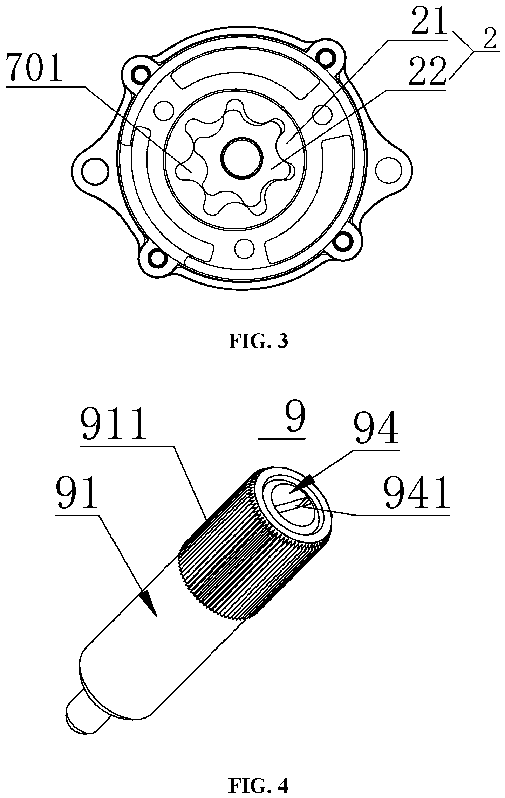

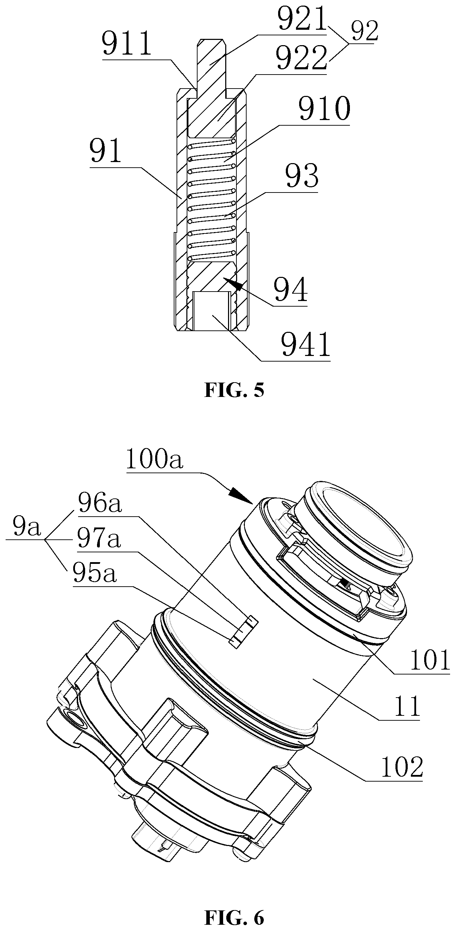

Referring to FIG. 4 and FIG. 5, the connecting part 91 has an accommodating chamber 910. The conduction member 9 further includes a contact part 92, an elastic part 93 and a cover part 94, where a part of the contact part 92, the elastic part 93 and at least a part of the cover part 94 are located in the accommodating chamber 910. In the height direction of the conduction member9, at least a part of the elastic part 93 is located between the contact part 92 and the cover part 94. One end of the elastic part 93 abuts against the contact part 92, and the other end of the elastic part 93 abuts against the cover part 94. In this embodiment, the elastic part 93 is a spring. Referring to FIG. 4 and FIG. 5, in this embodiment, the cover part 94 is connected with the connecting part 91. Specifically, an outer peripheral surface of the cover part 94 is formed with external threads, and the corresponding inner peripheral wall of the accommodating chamber 910 has internal threads, and the external threads of the outer peripheral surface of the cover part 94 are meshed with the internal threads of the corresponding inner peripheral wall of the accommodating chamber 910 to realize the connection between the cover part 94 and the connecting part 91. Referring to FIG. 4 and FIG. 5, the cover part 94 has a groove 941 extending from a lower end surface of the cover part 94 toward an upper end surface of the cover part 94, and the groove 941 does not penetrate the upper end surface of the cover part 94. With the groove 941, it is beneficial for the groove 941 to be matched with an external screwdriver, which on the one hand facilitates the assembly and disassembly of the cover part 94, and on the other hand is beneficial to screw the cover part 94, so that the compression amount of the elastic part 93 can be adjusted, and the force exerted by the elastic part 93 on the contact part 92 can be adjusted.

Referring to FIG. 4 and FIG. 5, in the height direction of the conduction member 9, a part of the contact part 92 extends out of the connecting part 91, and at least a part of the outer surface of the contact part 92 extending out of the connecting part 91 forms a part of the outer surface of the electronic oil pump 100, so that the contact part 92 extending out of the connecting part 91 can be configured to be exposed. In this embodiment, the contact part 92, the elastic part 93 and the cover part 94 are all capable of conducting electricity. In this embodiment, the exposed contact part 92 extending out of the connecting part 91 can be equipped with the external ground terminal. Because of the fact that the contact part 92 abuts against one end of the elastic part 93, the other end of the elastic part 93 abuts against the cover part 94, the cover part 94 is contacted and connected with the connecting part 91, and the connecting part 91 is contacted and connected with the first housing 11 shown in FIG. 2, the stator core 41 of the stator assembly 4 and the reference ground layer of the circuit board assembly 5 in FIG. 2 can be indirectly grounded to external, which is beneficial to reduce the electromagnetic radiation generated by the stator assembly 4 and the circuit board assembly 5, and further to reduce the interference of electromagnetic radiation on electronic components of the circuit board assembly 5 and/or other external devices.

Referring to FIG. 4 and FIG. 5, when an external force is applied on the contact part 92, the contact part 92 can move along a compression direction of the elastic part 93. When the external force on the contact part 92 is removed, the contact part 92 can move along an extension direction of the elastic part 93. In this way, it is beneficial to improve the reliability of the contact between the conduction member 9 and the external system.

Specifically, referring to FIG. 5, the connecting part 91 has a first hole 912, which extends from an upper end face of the connecting part 91 in a direction close toward a lower end face of the connecting part 91 along the height direction of the connecting part 91, and the accommodating chamber 910 extends from the lower end face of the connecting part 91 in a direction close to the upper end face of the connecting part 91. The first hole 912 is in communication with the accommodating chamber 910, and a radial dimension of the corresponding side wall of the first hole 912 is less than that of the accommodating chamber. The contact part 92 includes a first part 921 and a second part 922, which are connected with each other. An outer edge of the first part 921 is closer to the central axis of the contact part 92 than that of the second part 922, that is, the radial dimension of the outer edge of the first part 921 is less than that of the second part 922. The second part 922 is located in the accommodating chamber 910, and the upper end of the elastic part 93 abuts against the second part 922. The first part 921 passes through the first hole 912, and one end of the first part 921 extends out of the connecting part 91. In this embodiment, the connecting part 91 includes a first part 921 and a second part 922. Of course, in other embodiments, the connecting part 91 may be in a spherical shape or other shapes.

Referring to FIG. 1, the pump housing 1 further includes a pump cover 12. In this embodiment, the pump cover 12 is made of plastic, and the pump cover 12 is non-conductive. The pump cover 12 is supported on and fixedly connected with the first housing 11, and at least partially covers the first rotor assembly. The pump cover 12 has a through hole 120, which passes through the pump cover 12 along the height direction of the pump cover 12, and the conduction member 9 passes through the through hole 120. Referring to FIG. 2, in this embodiment, the conduction member 9 is located in the radial extension direction of the first rotor assembly 2.

Referring to FIG. 6, FIG. 6 is a schematic structural view of a second embodiment of the electronic oil pump according to the present application. The structure of the second embodiment of the electronic oil pump will be described in detail below.

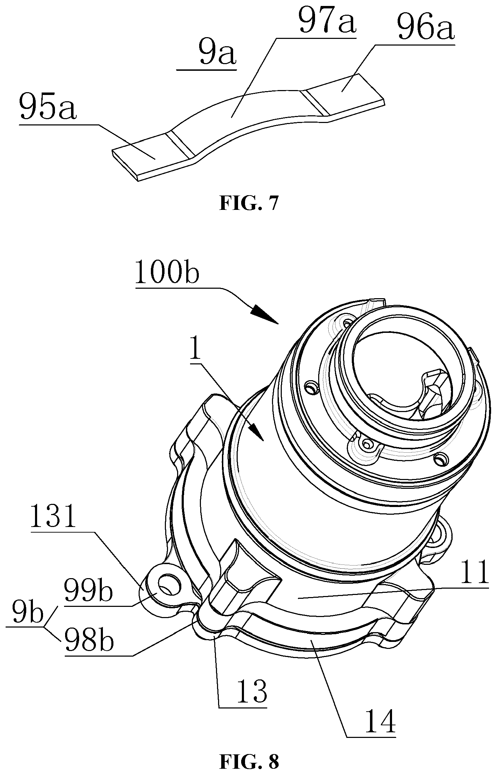

Referring to FIG. 6 and FIG. 7, in this embodiment, the conduction member 9a is fixedly connected with an outer side wall of the first housing 11 by welding, and a part of the conduction member 9a is elastic. Specifically, referring to FIG. 6 and FIG. 7, the conduction member 9a includes a first fixing part 95a, a second fixing part 96a and a convex part 97a, where the convex part 97a connects the first fixing part 95a and the second fixing part 96a, and the first fixing part 95a and the second fixing part 96a each is fixedly connected with the side wall of the first housing 11 by welding. The convex part 97a is arranged in a convex manner relative to the first fixing part 95a, and a gap is provided between the convex part 97a and the outer side wall of the first housing 11. The upper surface of the convex part 97a at least partially forms the outer surface of the electronic oil pump 100a, so that the upper surface of the convex part 97a can be exposed, and the convex part 97a is used for contacting with the outside. In this embodiment, the upper surface of the exposed convex part 97a located outside the first housing 11 can be equipped with the external ground terminal, that is, the stator core of the stator assembly and the reference ground layer of the circuit board assembly can be indirectly grounded to the external system, which is beneficial to reducing the electromagnetic radiation generated by the stator assembly and the circuit board assembly, and further beneficial to reducing the interference of the electromagnetic radiation on electronic components of the circuit board assembly and/or other external devices. Referring to FIG. 6 and FIG. 7, the convex part 97a has elasticity, which is beneficial to improve the reliability of the contact between the conduction member 9a and the external system. In this embodiment, the conduction member 9a includes a first fixing part 95a, a second fixing part 96a and a convex part 97a. Of course, in other embodiments, the conduction member 9a may have other structures.

Referring to FIG. 6, the electronic oil pump 100a further includes a first sealing ring 101 and a second sealing ring 102, each of which is sleeved on the outer side wall of the first housing 11. A preset distance is provided between the first sealing ring 101 and the second sealing ring 102 along the height direction of the first housing 11, and the conduction member 9a is located between the first sealing ring 101 and the second sealing ring 102. Other features in this embodiment can refer to the first embodiment of the electronic oil pump, and will not be described here.

Referring to FIG. 8, FIG. 8 is a schematic structural view of a third embodiment of an electronic oil pump according to the present application. The structure of the third embodiment of the electronic oil pump will be described in detail below.

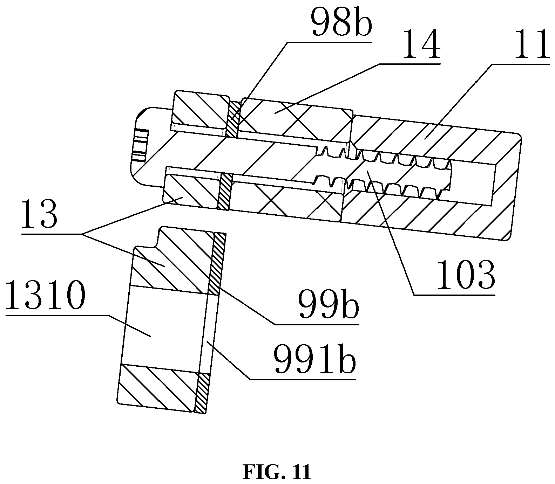

Referring to FIG. 8 to FIG. 11, the pump housing 1 further includes a bottom cover 13, which at least partially covers the circuit board assembly 5 shown in FIG. 2. The conduction member 9b includes a limiting part 98b, which is located between the first housing 11 and the bottom cover 13 along the height direction of the electronic oil pump 100b, and is electrically connected to the first housing 11. Specifically, referring to FIG. 8, the pump housing 1 further includes a second housing 14 which is made of plastic. The second housing 14 is located between the first housing 11 and the bottom cover 13 along the height direction of the electronic oil pump 100b. In this embodiment, the limiting part 98b is located between the second housing 14 and the bottom cover 13. Of course, in other embodiments, it is also possible that only a part of the limiting part 98b is located between the second housing 14 and the bottom cover 13, or the limiting part 98b is embedded in the second housing 14 or the bottom cover 13. Referring to FIG. 8, a screw or bolt 103 passes through the bottom cover 13, the limiting part 98b, the second housing 14 and the first housing 11. The screw or bolt 103 is conductive, and can be electrically connected with both the first housing 11 and the limiting part 98b. Specifically, in this embodiment, the screw or bolt 103 is electrically connected with the first housing 11 through a threaded connection, and the screw or bolt 103 is electrically connected with a through hole 981b of the limiting part 98b through an interference fit. In this embodiment, the electronic oil pump 100b includes the second housing 14. Of course, in other embodiments, the second housing 14 may not be provided.

Referring to FIG. 8 to FIG. 11, the conduction member 9b further includes a branch part 99b, and the limiting part 98b is connected with the branch part 99b. At least a part of an upper surface of the branch part 99b forms a part of the outer surface of the electronic oil pump 100b, so that the upper surface of the branch part 99b can be exposed. The branch part 99b is configured to be electrical-conductively connected with the outside. In this embodiment, the upper surface of the exposed branch part 99b can be equipped with the external ground terminal, equivalent to enable the stator core of the stator assembly and the reference ground layer of the circuit board assembly to be indirectly grounded to the external system, which is beneficial to reducing the electromagnetic radiation generated by the stator assembly and the circuit board assembly, and further beneficial to reducing the interference of the electromagnetic radiation on the electronic components of the circuit board assembly 5 and/or other external devices.

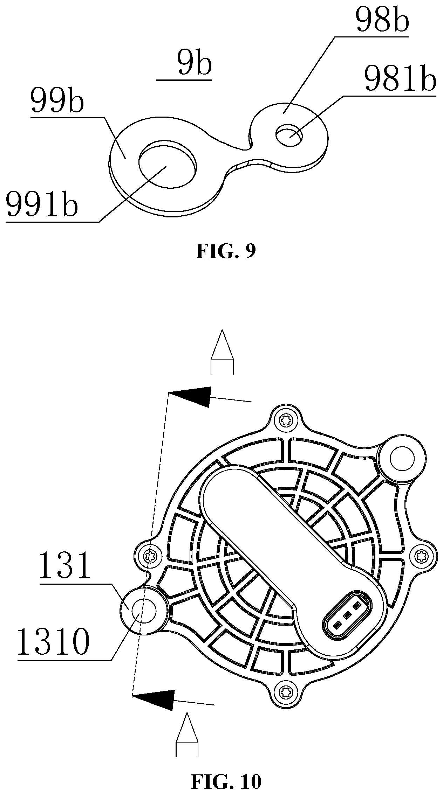

Referring to FIG. 10, the bottom cover 13 includes a mounting part 131, which is arranged to be protruded along the radial direction of the pump cover. The mounting part 131 has a mounting hole 1310, which passes through the mounting part 131 along the thickness direction of the mounting part 131. In this embodiment, the mounting hole 1310 is mainly used to be fixedly connected with the external system. Referring to FIG. 8 to FIG. 11, the branch part 99b is supported on the mounting part 131 and is arranged to be in contact with the upper surface of the mounting part 131. The branch part 99b has a through hole 991b, which passes through the branch part 99b along the thickness direction of the branch part 99b and is in communication with the mounting hole 1310. In this way, when the electronic oil pump 100b is mounted to the external system, the external connecting device will pass through the mounting hole 1310 and the through hole 991b, so that the upper surface of the branch part 99b can be in contact with the external system.

It should be noted that, the above embodiments are only used to illustrate the present application rather than limit the technical solutions described in the present application. Although the present application is described in detail in this specification with reference to the above embodiments, those of ordinary skill in the art should understand that those skilled in the art may still modify or equivalently replace the present application, and all technical solutions and improvements thereof that do not depart from the spirit and scope of the present application shall be covered within the scope of the claims of the present application.

## Claims

1. An electronic oil pump, comprising a stator assembly, a circuit board assembly and a pump housing, wherein at least a part of the pump housing is conductive, and at least one of a stator core of the stator assembly and a reference ground layer of the circuit board assembly is electrically connected to a conductive portion in the pump housing; the electronic oil pump further comprises a conduction member, which is fixedly connected to the pump housing or limitedly arranged relative to the pump housing; and
wherein a part of the conduction member is electrically connected to the conductive portion in the pump housing, and at least a part of an outer surface of the rest portion of the conduction member forms a part of the outer surface of the electronic oil pump.

2. The electronic oil pump according to claim 1, wherein the pump housing comprises a first housing capable of being conductive, wherein the first housing has a first housing chamber, in which the stator assembly is at least partially located, and the stator core of the stator assembly is electrical-conductively connected to a corresponding side wall of the first housing chamber, and the conduction member is fixed to the first housing.

3. The electronic oil pump according to claim 2, wherein a central axis of the conduction member is arranged in parallel with a height direction of the first housing; a part of the conduction member extends out of the first housing along the height direction of the electronic oil pump, and wherein the outer surface of the conduction member extending out of the first housing forms a part of the outer surface of the electronic oil pump.

4. The electronic oil pump according to claim 3, wherein the conduction member comprises a connecting part, where at least a part of an outer peripheral surface of the connecting part is formed with external threads, and wherein the first housing has a threaded hole, and the external threads of the connecting part are fitted with internal threads of the threaded hole.

5. The electronic oil pump according to claim 4, wherein the connecting part has an accommodating chamber, and the conduction member further comprises a contact part, an elastic part and a cover part, where a part of the contact part, the elastic part and at least a part of the cover part are located in the accommodating chamber; the cover part is connected with the connecting part; in the height direction of the conduction member, a part of the contact part extends out of the connecting part, and the outer surface of the contact part extending out of the connecting part forms a part of the outer surface of the electronic oil pump; at least a part of the elastic part is located between the contact part and the cover part along the height direction of the conduction member; one end of the elastic part abuts against the contact part, and the other end of the elastic part abuts against the cover part; and wherein when an external force is applied on the contact part, the contact part can move along a compression direction of the elastic part, and when the external force applied on the contact part is removed, the contact part can move along the extension direction of the elastic part.

6. The electronic oil pump according to any one of claims 3 to 5, wherein the pump housing further comprises a pump cover, which is non-conductive and is supported on and fixedly connected with the first housing; the electronic oil pump further comprises a first rotor assembly, and the pump cover at least partially covers the first rotor assembly; the pump cover is provided with a through hole, and the conduction member passes through the through hole; and wherein the conduction member is arranged in the radial extension direction of the first rotor assembly.

7. The electronic oil pump according to claim 2, wherein the conduction member is fixedly connected with an outer side wall of the first housing by welding; and wherein a part of the conduction member is elastic.

8. The electronic oil pump according to claim 7, wherein the conduction member comprises a first fixing part, a second fixing part and a convex part, where the convex part connects the first fixing part and the second fixing part, and the first fixing part and the second fixing part are fixedly connected with the side wall of the first housing by welding; the convex part is protruded relative to the first fixing part, and a gap is provided between the convex part and the outer side wall of the first housing; and wherein the convex part is elastic, and the upper surface of the convex part forms a part of the outer surface of the electronic oil pump.

9. The electronic oil pump according to claim 7 or 8, wherein the electronic oil pump further comprises a first sealing ring and a second sealing ring, each of which is sleeved on the outer side wall of the first housing; and wherein the first sealing ring is arranged at a preset distance relative to the second sealing ring along the height direction of the first housing, and the conduction member is located between the first sealing ring and the second sealing ring.

10. The electronic oil pump according to claim 1, wherein the pump housing further comprises a bottom cover, which at least partially covers the circuit board assembly; the conduction member comprises a limiting part and a branch part, and the limiting part is connected with the branch part;
wherein, along the height direction of the electronic oil pump, the limiting part is located between the first housing and the bottom cover, and the limiting part is electrically connected with the first housing; and wherein at least a part of an upper surface of the branch part forms a part of the outer surface of the electronic oil pump.

11. The electronic oil pump according to claim 10, wherein the bottom cover comprises an mounting part, which is arranged to be protruded along the radial direction of the pump cover; the mounting part is provided with a mounting hole which passes through the mounting part along the thickness direction of the mounting part; the branch part is supported on the mounting part and is arranged in contact with the upper surface of the mounting part; and wherein the branch part has a through hole, which passes through the branch part along the thickness direction of the branch part and is in communication with the mounting hole.

12. The electronic oil pump according to claim 10 or 11, wherein the pump housing further comprises a second housing which is made of plastic; the second housing is located between the first housing and the bottom cover along the height direction of the electronic oil pump, the branch part is located between the second housing and the bottom cover, and a screw or bolt passes through the bottom cover, the branch part, the second housing and the first housing; and wherein the screw or bolt is capable of conducting electricity, and is in contact with the first housing and the branch part.
